Europäisches Patentamt

**European Patent Office**

Office européen des brevets

(11) Numéro de publication: **0 211 752**
**A1**

# (12) DEMANDE DE BREVET EUROPEEN

(21) Numéro de dépôt: 86401694.4

(22) Date de dépôt: 29.07.86

(51) Int. Cl.⁴: **E 04 C 2/04**
E 04 C 2/26, C 04 B 28/04
E 04 F 13/08

(30) Priorité: 30.07.85 FR 8511637

(43) Date de publication de la demande:
25.02.87 Bulletin 87/9

(84) Etats contractants désignés:
BE CH DE GB IT LI LU NL

(71) Demandeur: **PLATRES LAFARGE**
**5 Avenue de l'Egalité**
**F-84800 Isle-Sur Sorgue(FR)**

(72) Inventeur: **Moisset, Jacques**
**Les Landes de Balandrane St Antoine**
**F-84800 L'Isle-Sur-Sorgue(FR)**

(72) Inventeur: **Mombrun, Bernard**
**Villa 104 Le Castellas**
**F-84200 Carpentras(FR)**

(72) Inventeur: **Zuber, François**
**colline Ste Anne**
**F-84270 Vedene(FR)**

(74) Mandataire: **Phélip, Bruno et al,**
**c/o Cabinet Harlé & Phélip 21, rue de la Rochefoucauld**
**F-75009 Paris(FR)**

(54) **Voile de renfort pour éléments préfabriqués de support et/ou d'isolation et/ou de revêtement, éléments préfabriqués de ce type munis d'un voile de renfort, et procédés de pose d'un tel voile et de tels éléments.**

(57) Le voile de renfort (7) selon l'invention, recouvrant au moins une face d'un panneau d'isolation (D), est réalisé en un matériau composite dont la matrice est constituée de 25 à 50% de ciment, de 30 à 60 % de charges minérales, de 2 à 15 % de résine synthétique, et de 0 à 2 % d'adjuvants divers, notamment d'accélérateurs de durcissement, et dont l'armature est constituée de fibres minérales et/ou synthétiques noyées dans la matrice.

Le jointoiement entre panneaux adjacents, comportant chacun un tel voile de renfort, est assuré par apport d'une bande d'armature et de matrice en pâte dans les saignées entre les panneaux contigus.

Application à la réalisation de panneaux d'isolation intérieure et extérieure de façades, de panneaux de chapes de sol, et de panneaux isolants de supports de couverture et à parement intérieur intégré.

FIG.4

EP 0 211 752 A1

1

La présente invention concerne le domaine technique des éléments préfabriqués de support et/ou d'isolation et/ou de revêtement utilisés dans l'industrie du bâtiment.

L'invention se rapporte plus précisément à des panneaux et des plaques pour l'isolation intérieure ou extérieure des façades, à des panneaux de support et éventuellement d'isolation pour des chapes de sol, ainsi qu'à des panneaux isolants de support de couverture et à parement intérieur intégré, qui sont des éléments manufacturés de plus en plus fréquemment utilisés dans la construction de bâtiments, et en particulier de maisons individuelles d'habitation.

Dans le domaine de la construction des bâtiments, le niveau de plus en plus élevé des exigences en matière d'isolation thermique et simultanément phonique, d'une part, et, d'autre part, le développement de technologies dites "légères", tant au point de vue de la simplicité et de la légèreté proprement dites des matériels mis en oeuvre qu'au point de vue de la facilité de leur mise en oeuvre, en vue d'améliorer la productivité de pose, notamment de revêtements isolants, favorisent l'arrivée sur le marché de panneaux et de plaques manufacturés, modulaires, de toutes sortes :

- en simples plaques ou en composites multicouches,
- en matériaux divers, tels que les fibres et particules de bois, le plâtre cartonné ou fibreux, le ciment-fibre, les fibres-aggloméré, les isolants en fibres minérales ou en matières plastiques alvéolaires, etc....

L'isolation intérieure des façades de bâtiments est, dans l'art antérieur, réalisée le plus couramment à l'aide de panneaux préfabriqués, appelés complexes de doublage, qui sont constitués d'une plaque de plâtre contrecollée sur une plaque d'un matériau isolant, par exemple le polystyrène.

Les complexes de doublage ne peuvent être utilisés qu'en placages sur des supports présentant une résistance mécanique suffisamment élevée, du fait qu'ils ne sont pas autoportants, c'est-à-dire qu'ils ne possèdent pas par eux-

2

mêmes la rigidité voulue leur permettant de n'être maintenus qu'au sol et au plafond, comme une cloison. De ce fait, ces complexes de doublage sont le plus souvent collés au mur qu'ils ont à charge d'isoler. Le collage est réalisé par des plots ou des cordons d'une colle à consistance de mortier, répartis régulièrement entre la face libre des plaques de matériau isolant, qui constitue la face arrière des complexes de doublage, et le mur support.

Cette technique de pose par collage n'est pas applicable si le mur support n'est pas suffisamment plan, homogène, sain, non poudreux, sec, etc... Or, ces conditions défavorables sont souvent rencontrées au cours des travaux de restauration de bâtiments anciens, ce qui est une source de difficultés.

La technique de pose par collage ne s'applique pas non plus lorsque la configuration de la paroi de façade ne s'apparente plus à celle d'un mur au sens traditionnel du terme. C'est le cas notamment des parois de type bardage supportées par une ossature faisant saillie sur la face intérieure, et que l'on rencontre de plus en plus souvent dans les systèmes constructifs de maisons individuelles.

Lorsque ces difficultés de pose se présentent, il a déjà été proposé, selon une technique de l'art antérieur, une solution consistant à poser, au préalable, contre la paroi inapte au collage, une ossature en bois ou en métal sur laquelle les complexes isolants seront fixés. Cette solution occasionne des coûts supplémentaires de fourniture et de pose de l'ossature. Par ailleurs, la surépaisseur de l'ossature se traduit obligatoirement par une perte de surface habitable.

Lorsqu'il n'existe pas de support adéquat pour maintenir des complexes de doublage, une autre technique communément adoptée pour apporter à ces panneaux la rigidité qui leur manque consiste à coller une seconde plaque de plâtre sur la face libre de la plaque en matériau isolant. On obtient ainsi un panneau sandwich à âme isolante avec parements en plaques de plâtre. Cette solution apporte aux panneaux une rigidité suffisante pour leur permettre de n'être fixés qu'en tête, contre le plafond ou plancher haut, et en pied, sur le sol fini ou plancher bas, ce qui les affranchit de toute nécessité de support intermédiaire entre le plancher et le plafond. Mais cette solution n'est pas sans inconvénients : d'une part, le poids de chaque panneau se trouve ainsi pratiquement doublé, car celui de l'isolant est pratiquement négligeable, et, d'autre part, l'épaisseur du panneau est augmentée de celle de la seconde plaque de plâtre, sans pour autant que l'isolation thermique soit améliorée, car l'isolation apportée par une plaque de plâtre est négligeable devant celle de l'isolant. Par ailleurs, la qualité du parement de cette seconde plaque de plâtre n'est pas mise à profit dans la construction, puisque cette seconde plaque de plâtre sera tournée vers le mur de façade, et sa présence donnera également lieu à une perte de surface habitable, du fait de la surépaisseur ainsi apportée au panneau.

Afin de remédier à ces inconvénients, des complexes de doublage et panneaux sandwiches de l'art antérieur, il a déjà été proposé, dans la demande de brevet français n° 84 01 956 du 8 février 1984, au nom de la Demanderesse, de fixer sur la face libre d'une plaque isolante dont l'autre face adhère à une plaque de parement, un élément de rigidification d'épaisseur très inférieure à celle de la plaque de parement et constitué par au moins une feuille de carton ou papier fort comportant au moins une charge et/ou une fibre minérale ou organique susceptible de lui conférer des caractéristiques de résistance mécanique suffisantes pour conférer à l'ensemble la rigidité caractérisant les panneaux autoportants selon les essais en vigueur dans le bâtiment, tout en s'opposant à l'effet de bilame habituellement rencontré avec de tels panneaux composites. Les charges minérales et/ou organiques de la ou des feuilles de carton ou de papier fort sont choisies parmi les résines synthétiques et les poudres minérales compatibles avec le travail de la pâte à papier. Dans le cas où la ou les feuilles de papier ou de carton comportent des fibres minérales ou organiques, celles-ci sont

4

choisies parmi les fibres cellulosiques, les fibres de verre et les fibres de Kevlar, de préférence, et la feuille de rigidification peut comporter également, en association avec le papier ou le carton, au moins un liant, par exemple du latex.

Mais, compte tenu de sa constitution, un tel panneau isolant à feuille de rigidification en carton ou papier traité ne convient bien qu'au doublage intérieur des parois de façades qui ne sont pas trop humides, et il ne peut être utilisé par exemple pour l'isolation extérieure des murs de bâtiments.

Dans l'art antérieur, les murs de bâtiments à isolation extérieure comprennent en général, sur la paroi en maçonnerie qui peut être de type traditionnel, une couche de matière isolante, par exemple de polystyrène expansé ou de mousse de polyuréthane, sur laquelle est disposée une couche de protection, généralement plus mince, et dont le but est d'empêcher que la couche de matière isolante ne soit détériorée ou que son efficacité ne soit réduite du fait de la pluie, du rayonnement solaire ou des chocs et frottements.

Parmi les techniques de mise en place de l'isolation externe, certaines font appel à la pose préalable de panneaux de matière isolante, suivie du revêtement de ces panneaux par un enduit de protection. Ces techniques exigent, pour la réalisation de l'enduit, un temps et un travail importants.

D'autres techniques font appel à des panneaux de protection préfabriqués, qui sont posés sur la face externe des panneaux de matière isolante, et qui peuvent éventuellement être collés en usine chacun sur un panneau de matière isolante, en réalisant alors un "panneau de vêture". Ces techniques permettent une pose plus facile, mais elles aboutissent à un aspect extérieur de la façade qui n'est pas toujours jugé satisfaisant, du fait de la présence de joints visibles, assez importants, qui le différencient de celui d'un enduit traditionnel. Cependant, ces joints sont nécessaires, en raison des dilatations d'origine thermique qui, en l'absence de joints, pourraient entraîner des déplacements relatifs de panneaux.

5

Un autre inconvénient lié à l'utilisation de panneaux de protection préfabriqués est que les découpes nécessaires afin de se conformer à l'architecture du bâtiment (angles, baies, etc..) sont parfois difficiles à pratiquer.

Il existe donc un besoin d'un système de revêtement de murs par l'extérieur qui soit à la fois de mise en oeuvre facile et qui procure un aspect extérieur identique à celui des revêtements traditionnels.

Par ailleurs, on observe sur le marché l'arrivée de panneaux isolants de support de couverture et à parement intérieur intégré, qui sont destinés à la couverture des bâtiments et qui remplissent simultanément les fonctions suivantes :

- ils assurent une résistance mécanique suffisante en tant que support de couverture,

- ils procurent une résistance temporaire aux intempéries, dans l'attente de la pose de la couverture définitive,

- ils présentent de bonnes caractéristiques d'isolation thermique,

- ils présentent une sous-face, ou face tournée vers l'intérieur, qui est traitée en "prêt à peindre", afin de restituer l'aspect d'un plafond.

La configuration de ces panneaux est fréquemment celle d'un sandwich constitué d'une âme en matière isolante, notamment en une matière plastique alvéolaire, du type polystyrène expansé ou polyuréthane, enserrée entre deux panneaux à base de bois, notamment en panneaux de particules. Bien que ces panneaux à base de bois soient traités en vue d'améliorer leur comportement à l'humidité, ils restent toujours plus ou moins susceptibles à l'eau et à l'hygrométrie de l'air, ce qui se traduit notamment par des variations dimensionnelles. Celles-ci sont particulièrement gênantes sur la sous-face jouant le rôle de plafond, et sur laquelle tous les joints apparaissent sous forme de fissures tôt ou tard après la mise en peinture.

La face supérieure du panneau, bien que protégée

6

par la couverture, est soumise à des variations thermo-hygrométriques encore plus sévères, qui sollicitent fortement les
joints et les font "travailler". Sur cette face du panneau,
qui n'est pas visible de l'intérieur, le problème ne relève
pas de l'apsect esthétique mais de l'étanchéité, dans la
mesure où peuvent se produire soit des condensations, soit
des infiltrations d'eau ou de neige poudreuse au travers de
la couverture, dans certaines régions particulièrement exposées du point de vue climatique.

Enfin, il est également connu, dans l'industrie
du bâtiment, d'utiliser des panneaux pour réaliser des chapes
de sol destinées à recevoir le revêtement de sol.

Dans l'art antérieur, les chapes de sol sont :

- soit de type traditionnel ou "humide", et constituées
d'un mortier à base de liant hydraulique ; leur mise en oeuvre est salissante et généralement coûteuse en main-d'oeuvre,
et le temps de cure (durcissement et séchage) demande plusieur jours, ce qui retarde d'autant la poursuite des
travaux,

- soit de type préfabriqué ou "sec", et constituées
de panneaux à base de bois, ou de plaques de plâtre ; ces
panneaux, avantageux du point de vue de la productivité de
pose, présentent l'inconvénient d'être susceptibles à l'humidité et aux variations hygrométriques, ce qui se traduit par
des mouvements des joints, des gauchissements des panneaux,
le risque de prolifération de moisissures, et, de plus, la
résistance au poinçonnement de ces panneaux est très sensiblement inférieure à celle des chapes traditionnelles.

En résumé, on observe que les panneaux isolants
de l'état de la technique, qui sont utilisés en doublage de
façades de bâtiment, ne présentent pas toujours une résistance ou une rigidité suffisantes pour être mis en oeuvre
sans appui intermédiaire ou continu le long de leur portée,
ce qui complique ou alourdit leur mise en oeuvre.

De plus, la nature des matériaux qui constituent
ces panneaux, comme d'ailleurs les panneaux isolants utilisés
.i support de couverture ainsi que les panneaux, éventuellement isolants, utilisés pour réaliser des chapes de sol, les rend souvent sensibles aux variations thermo-hygrométriques auxquelles sont soumis les bâtiments. Ces variations, qui affectent la stabilité dimensionnelle des panneaux, se manifestent par le travail des joints ou par le gauchissement des panneaux. Ces phénomènes sont particulièrement sensibles avec les panneaux composites utilisés en enveloppe de bâtiment puique les conditions thermo-hygrométriques peuvent être très différentes entre les deux faces externe et interne de chaque panneau d'enveloppe et/ou de revêtement extérieur du bâtiment.

L'invention a pour objet d'assurer le renforcement mécanique à la flexion et au poinçonnement ainsi que la stabilisation dimensionnelle des panneaux manufacturés utilisés dans la construction des bâtiments. De plus le renforcement selon l'invention doit être tel qu'il présente des qualités de protection contre les intempéries et d'imperméabilisation.

Un objet de la présente invention est de fournir un renforcement sous la forme d'un mince voile de renfort, améliorant de manière significative la résistance à la flexion et la rigidité des panneaux simples ou composites existant sur le marché,et réalisé avec des constituants économiques et faciles à mettre en oeuvre.

Un autre objet de l'invention est de fournir un mince voile de renfort assurant la stabilité dimensionnelle et l'absence de gauchissement des panneaux ainsi renforcés, grâce au comportement inerte du voile de renfort à l'égard de l'humidité ou des variations thermo-hygrométriques de l'air.

Dans certaines de ces applications, un autre objet encore de la présente invention est de fournir un voile de renfort assurant l'imperméabilisation et la protection aux intempéries des panneaux qu'il renforce.

Dans certaines autres applications de l'invention, un autre objet de celle-ci est de fournir un voile de renfort assurant une bonne résistance aux chocs, au poinçonnement ou à la perforation.

En terme de résistance des matériaux, on sait que la rigidité ou la raideur d'un élément s'exprime par le pro-

8

duit de son moment d'inertie I par le module d'élasticité E du matériau constituant cet élément.

On sait de plus que le moment d'inertie croît comme le cube de l'épaisseur de l'élément, ce qui signifie que plus la matière constituant la pièce est éloignée du centre de gravité ou de la fibre neutre de la pièce, mieux elle participe à la raideur de cette pièce. De plus, plus le module d'élasticité de cette matière est élevé, plus la raideur sera assurée. Enfin, la résistance à la rupture de la pièce sera d'autant plus élevée que la limite à la rupture de la matière qui la constitue sera elle-même élevée.

Compte tenu de toutes les considérations qui précèdent, l'invention consiste à rapporter, en usine, sur l'une ou les deux faces d'un panneau ou d'une plaque jugé insuffisamment rigide, résistant et éventuellement imperméable, un voile de renfort présentant de bonnes propriétés de résistance en traction, en compression, en dureté et en imperméabilité.

Le voile de renfort conforme à l'invention, destiné à recouvrir, au moins partiellement, une face au moins d'un élément préfabriqué du type panneau ou plaque de support et/ou d'isolation et/ou de revêtement, pour la construction de bâtiments, se caractérise en ce qu'il est réalisé en un matériau composite constitué, d'une part, d'une matrice de faible porosité, résistante en compression, peu ou pas sensible à l'eau, à l'humidité ainsi qu'aux effets biologiques produits par une forte hygrométrie, et comportant essentiellement, en parties et en poids,

- de 25 à 50 % de ciment,
- de 30 à 60 % de charges minérales,
- de 2 à 15% d'au moins une résine synthétique choisie parmi les résines vinyliques et/ou acryliques,et
- de 0 à 2 % d'adjuvants divers, notamment d'accélérateur de durcissement, et, d'autre part, d'une armature, résistante en traction, noyée dans la matrice, et constituée de fibres minérales et/ou synthétiques, peu ou pas sensible à l'eau, à l'humidité et aux effets biologiques produits par une forte hygrométrie.

Avantageusement,la matrice,dont l'épaisseur est de préférence comprise entre environ 1 et 5 mm,comprend un ciment qui est un ciment Portland ou alumineux ou un mélange de ciments Portland et/ou alumineux,et les charges minérales de la matrice comprennent des charges calcaires et/ou siliceuses. Le' choix de la résine synthétique parmi les résines vinyliques et/ou acryliques est une caractéristique essentielle de l'invention,dans la mesure où ces résines sont très économiques et d'une grande facilité de mise en oeuvre,contrairement aux résines époxydes et polyesters,qui sont proposées pour des applications analogues par le brevet belge 782.111.De son côté ,l'armature peut être constituée de fibres en vrac ayant des longueurs comprises entre environ 5 et 25mm,mais, de préférence,l'armature est constituée d'une nappe de fibres,tissée ou non,et dont le grammage est compris entre environ 50 et 1000 g/m$^2$.A titre d'exemple non limitatif,lorsque l'armature comprend des fibres minérales,ces dernières peuvent être choisies dans le groupe des fibres de verre et d'amiante, tandis que les fibres synthétiques de l'armature peuvent être choisies avantageusement dans le groupe des fibres de Kevlar (marque déposée),de polyamide et de polypropylène.

A l'état durci,la matrice du voile de renfort selon l'invention a pour propriété remarquable d'adhérer très fortement à la plupart des matériaux utilisés pour fabriquer les plaques et panneaux de construction,à savoir le ciment, le ciment-fibres,les fibres-aggloméré,le bois,le plâtre,les matières plastiques alvéolaires,etc...

De ce fait,un procédé particulièrement avantageux de pose d'un voile de renfort selon l'invention sur un panneau ou une plaque de construction consiste à étaler la matrice, qui se présente à l'état frais sous la forme d'une pâte, sur au moins une face du panneau ou de la plaque,et sur une épaisseur réglable à volonté entre environ 1 et 5 mm,puis à noyer l'armature dans l'épaisseur de la matrice,avant que cette dernière ne durcisse. L'utilisateur est maître de la durée du durcissement,qui est comprise entre quelques minutes et quelques heures,en jouant sur les quantités et/ou la nature non seulement des adjuvants accélérateurs qui ont été préalablement incorporés à la matrice,mais également des constituants de la matrice elle-même.

L'invention a également pour objet un élément préfabriqué,du type panneau ou plaque de support et/ou d'isolation et/ou de revêtement,pour la constructionde bâtiments,

10

qui se caractérise en ce que l'une au moins de ses faces est au moins partiellement recouverte d'un voile de renfort selon l'invention.

Pour l'isolation intérieure des façades, l'invention propose un panneau isolant comprenant une plaque de parement, par exemple en plâtre, adhérant par l'une de ses faces à une face d'une plaque de matériau isolant, par exemple en polystyrène expansé, et le panneau isolant se caractérise en ce que le voile de renfort est fixé à la face de la plaque de matériau isolant qui n'est pas recouverte par la plaque de parement.

En apportant le voile de renfort, objet de la présente invention, sur celle des faces d'un complexe de doublage de l'art antérieur qui ne comporte pas la plaque de plâtre, ou bien à la place de celle des plaques de plâtre qui, sur un panneau sandwich, est destinée à être tournée vers le mur de façade, ou encore à la place de la feuille de rigidification comprenant au moins une couche de papier ou de carton fort, comme décrit dans la demande de brevet français précitée, on obtient un panneau composite d'une raideur suffisante pour satisfaire aux épreuves en vigueur dans le bâtiment et qui caractérisent les panneaux monoblocs autoportants, lui permettant ainsi de n'être fixé que par deux bords opposés, et notamment sa tête et son pied, comme une cloison.

En outre, un tel panneau soumis à des variations thermo-hygrométriques conserve une excellente stabilité dimensionnelle, qui ne produit pas d'effet bilame préjudiciable à la planéité du panneau.

De plus, la pérennité du voile de renfort, constitué essentiellement de matières minérales, est parfaitement assurée même dans des milieux favorables aux attaques biologiques (moisissures, champignons, insectes, etc..).

Pour l'isolation extérieure des façades, l'invention propose un panneau isolant comprenant une plaque d'un matériau isolant, tel que du polystyrène expansé ou de la mousse de polyuréthane, dont une face porte un revêtement de protection, et ce panneau se caractérise en ce que le revêtement de pro-

11

tection est constitué par le voile de renfort qui recouvre cette face de/plaque de matériau isolant, sauf sur une marge de largeur limitée, s'étendant sur le périmètre de la plaque, l'armature en nappe de fibres débordant de la matrice du voile de renfort et s'étendant au moins jusqu'à la tranche de la plaque.

Le voile de renfort, objet de la présente invention, se prête particulièrement bien à cette application au revêtement de la face externe des panneaux d'isolation par l'extérieur des façades, du fait de son excellente stabilité dimensionnelle, et de ses caractéristiques d'étanchéité, de résistance aux agressions atmosphériques, de dureté superficielle, de résistance au poinçonnement, et de bonne adhérence sur les matériaux isolants, notamment le polystyrène expansé.

En outre, l'utilisation de tels panneaux isolants pour l'isolation extérieure des façades permet de réaliser une isolation sans joint apparent par la mise en oeuvre d'un procédé propre à l'invention, et qui consiste, lors de la fabrication des panneaux, à ne pas étaler la matrice sur une marge de largeur limitée s'étendant le long du périmètre du panneau, et à utiliser comme armature une nappe de fibres que l'on fait déborder de la matrice et s'étendre dans la marge au moins jusqu'à la tranche du panneau. Ensuite, lors de la pose des panneaux préfabriqués, le procédé propre à l'invention consiste à monter côte à côte plusieurs panneaux, en les reliant l'un à l'autre et/ou à au moins un support commun à au moins deux panneaux adjacents, de façon à obtenir des saignées formées chacune par deux marges adjacentes de deux panneaux contigus et chacune garnie d'une frange d'armature débordant de la matrice du voile de renfort du panneau correspondant, puis à enduire chaque saignée avec de la pâte constituant la matrice, après avoir, éventuellement, rapporté dans la saignée une bande d'armature de la largeur de la saignée, afin d'assurer la continuité du voile de renfort.

Cette continuité du voile de renfort, qui assure un aspect identique à celui des enduits traditionnels, est donc

0211752

12

réalisée sur chantier, lors de la mise en oeuvre des panneaux isolants recouverts en usine du voile de renfort, par jointoiement des panneaux avec continuité de l'armature.

De tels panneaux sont destinés à être utilisés en placage sur la face externe des murs qu'ils/ont à charge d'isoler. Le collage est réalisé par des plots ou des cordons d'une colle à consistance de mortier, les plots ou cordons étant régulièrement répartis entre la face du panneau non recouverte du voile de renfort et le mur support.

Lorsque la configuration de la paroi de façade ne s'apparente pas à celle d'un mur au sens traditionnel du terme, le placage par collage ne convient plus. C'est le cas notamment des parois à ossature. Dans ce cas, selon l'invention, la face de la plaque de matériau isolant qui ne porte pas le voile de renfort est revêtue d'une couche de rigidification et de support d'organes de fixation à l'ossature, de sorte que l'élément préfabriqué constitue un panneau de façade légère autoportante. Dans une première variante, la couche de rigidification peut être constituée par un second voile de renfort selon l'invention, et qui recouvre toute la face correspondante de la plaque de matériau isolant. L'application du voile de renfort, objet de l'invention, sur les deux faces du panneau isolant confère à ce dernier une excellente raideur. Mais, dans cette configuration de façade légère autoportante, comme l'application du deuxième voile de renfort sur la face interne du panneau isolant a pour seul objet le renforcement mécanique du panneau, il est avantageux que, dans une seconde variante, le deuxième voile de renfort soit remplacé par une plaque à base de bois ou en plâtre.

L'invention propose également un panneau isolant de support de couverture et à parement intérieur intégré, de structure en sandwich, comprenant une âme en matière isolante entre deux couches rigides, dont l'une est une couche externe destinée à supporter la couverture, et l'autre une couche interne constituant le parement intérieur intégré, et ce panneau isolant selon l'invention se caractérise en ce que

13

la couche externe au moins est constituée d'un voile de renfort, qui recouvre la face externe de l'âme isolante sauf sur une marge s'étendant sur le périmètre de cette face externe, l'armature en nappe de fibres débordant de la matrice du voile de renfort et s'étendant au moins jusqu'à la tranche de l'âme isolante. L'application d'au moins un voile de renfort, objet de l'invention, à un tel panneau permet de lui assurer d'excellentes caractéristiques d'étanchéité et de stabilité dimensionnelle, ainsi qu'un bon comportement à l'humidité. De plus, si les panneaux comprennent un voile de renfort sur chacune des deux faces de l'âme isolante, et si la continuité des voiles de renfort de la face externe des panneaux est assurée, de la manière déjà décrite ci-dessus, par l'enduction de chaque saignée délimitée par deux marges adjacentes de deux panneaux contigus avec de la pâte constituant la matrice après avoir rapporté une bande d'armature de la largeur de la saignée, on assure l'étanchéité de la face supérieure des panneaux assemblés, et l'absence de fissuration de la sous-face des panneaux, dont la résistance mécanique de chacun est excellente compte tenu de la présence des deux voiles de renfort. Cependant, dans une variante préférée, le parement intérieur intégré de chaque panneau est constitué d'une plaque de plâtre à bords amincis, ce qui permet également d'assurer l'absence de solution de continuité, au droit des joints entre les sous-faces des panneaux assemblés.

L'invention a enfin pour objet un panneau de support et, éventuellement, d'isolation pour chape de sol, comprenant une plaque d'un matériau rigide, éventuellement doublée, du côté de la sous-face de la chape, d'une plaque de matériau isolant résistant en compression, et ce panneau se caractérise en ce qu'un voile de renfort, propre à l'invention, recouvre la face de la plaque de matériau rigide qui est tournée du côté de la face supérieure de la chape, sauf sur une marge de largeur limitée qui s'étend sur le périmètre de la plaque de matériau rigide, l'armature en nappe de fibres débordant de la matrice du voile de renfort et s'étendant au moins jus-

14

qu'à la tranche de la plaque.

En rapportant un voile de renfort, objet de l'invention, sur un panneau de support de structure traditionnelle pour chape de sol, par exemple un panneau à base de bois ou une plaque de plâtre, on élimine la susceptibilité à l'humidité et aux variations hygrométriques de ces panneaux de l'état de la technique, et donc les risques de mouvement des joints, de gauchissement des panneaux et de prolifération de moisissures. Le voile de renfort améliore de façon significative la raideur du panneau manufacturé, et la résistance au poinçonnement de ce dernier est sensiblement égale à celle des chapes traditionnelles. De plus, si les joints entre les différents panneaux sont traités de la manière déjà décrite ci-dessus afin d'assurer la continuité du voile de renfort, on supprime tout risque lié aux mouvements des joints du fait de cette continuité du voile de renfort sur toute la surface de la chape. Pour l'exécution des joints, il est à noter que l'épaisseur et la largeur réduites des saignées formées chacune par deux marges adjacentes de deux panneaux contigus, permettent d'utiliser une pâte de matrice fortement accélérée, ce qui garantit une mise en service rapide de la chape. Bien entendu, un tel panneau pour chape de sol, à plaque en bois ou en plâtre recouverte d'un voile de renfort selon l'invention, peut être associé par la face qui ne porte pas le voile de renfort à un isolant thermique résistant en compression, pour l'emploi en sol.

Il est également possible de réaliser des panneaux de plancher porteur, en modulant l'épaisseur et/ou les caractéristiques de la plaque de support, à base de bois ou en plâtre, et en modulant également l'épaisseur de la matrice et/ou le grammage de la nappe de fibres d'armature du voile de renfort recouvrant la face supérieure de la plaque de support.

D'autres avantages et caractéristiques de l'invention apparaîtront à la lecture de la description non limitative suivante d'exemples de comparaison et de réalisation de panneaux et de plaques préfabriquées selon l'invention, en réfé-

15

rence au dessin annexé sur lequel :

- la figure 1 est une coupe transversale d'un premier panneau isolant ou complexe de doublage de l'art antérieur, posé par collage sur la face intérieure d'une façade,

- la figure 2 est une vue analogue à la précédente d'une seconde forme de réalisation de panneau isolant ou complexe de doublage de l'art antérieur, posé sur ossature,

- la figure 3 est une vue analogue à la précédente d'une troisième forme de réalisation de panneau isolant de type sandwich de l'art antérieur,

- la figure 4 est une vue analogue aux précédentes d'une forme de réalisation de panneau isolant autoportant selon la présente invention,

- la figure 5 représente une coupe du bord d'un panneau selon l'invention pour chape de sol,

- la figure 6 montre comment deux panneaux selon la figure 5 sont jointoyés pour assurer la continuité du voile de renfort,

- la figure 7 représente de manière analogue à la figure 6 deux panneaux de plancher porteur, pour chape de sol et posés sur solives,

- la figure 8 représente, en coupe verticale, une isolation de façade par l'extérieur, au niveau de deux panneaux isolants accolés et reliés sans joint apparent, les panneaux isolants étant collés contre la face externe de la façade,

- la figure 9 est une vue analogue à la figure 8, d'une isolation de façade par l'extérieur qui est supportée par une ossature de la façade, et

- la figure 10 est une vue en coupe verticale d'une toiture constituée de panneaux isolants de support de couverture et à parement intérieur intégré, au niveau de deux panneaux contigus.

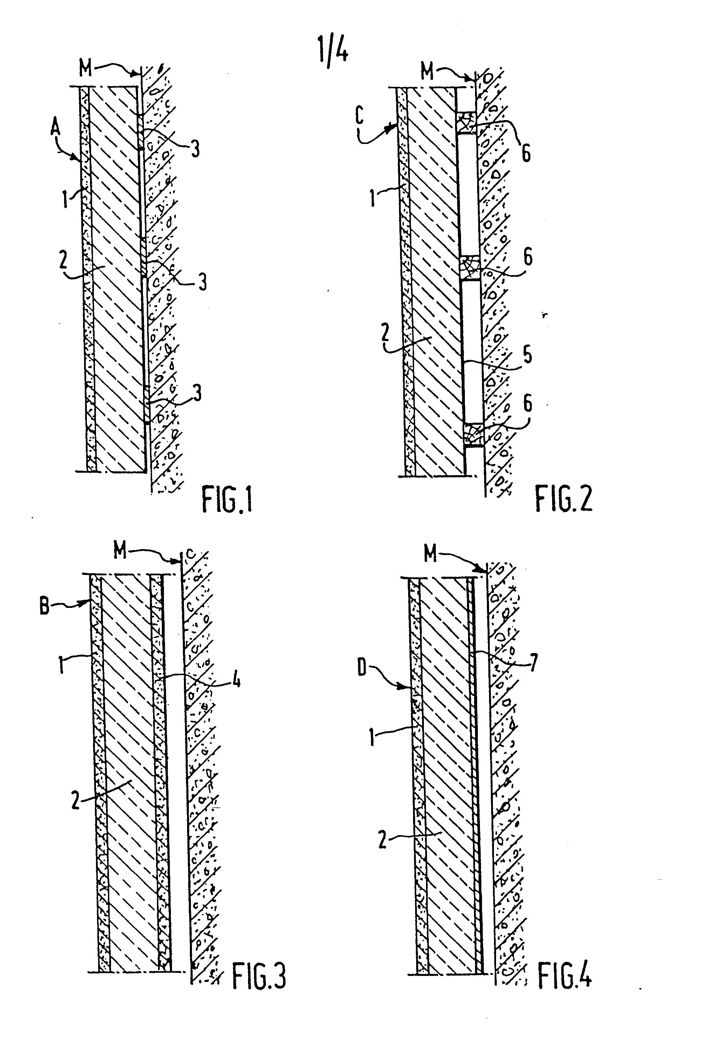

Sur les figures des dessins, les éléments identiques ou analogues portent les mêmes références. Dans la forme de réalisation connue de la figure 1, le panneau isolant A pour l'isolation intérieure des façades est constitué d'une

16

plaque de parement en plâtre 1 sur une face de laquelle adhère un isolant 2, par exemple une plaque de polystyrène expansé, présentant sur sa face libre un certain nombre de plots 3 de collage du panneau isolant A, ou complexe de doublage, sur le mur M.

Sur la figure 2, on a représenté un panneau isolant C également appelé complexe de doublage, qui est constitué d'une plaque de parement en plâtre 1 et d'un isolant 2 dont l'autre face est fixée par collage ou vissage sur une ossature 6 fixée au mur à recouvrir M.

Sur la figure 3, on a représenté un panneau isolant B, de structure sandwich, comportant deux plaques de plâtre 1 et 4 entre lesquelles est disposé en sandwich l'isolant 2, l'une des plaques de plâtre 1 servant de plaque de parement, tandis que l'autre plaque de plâtre 4 est une plaque de rigidification qui permet de s'affranchir du mur support, le panneau B n'étant plus fixé qu'en tête et en pied. Dans une variante d'un tel panneau isolant de type sandwich, la plaque de rigidification 4 peut être remplacée par une feuille de rigidification, qui est constituée selon l'enseignement de la demande de brevet français précitée. A titre d'exemple, une telle feuille de rigidification peut être réalisée en carton de type minéral d'un poids compris entre 0,5 et 1 kg/m², le carton étant principalement constitué de 30 à 80 % de charge minérale, de 5 à 45 % de fibres cellulosiques, de 0 à 15 % de fibres de verre, et, éventuellement, d'au moins un liant tel que du latex.

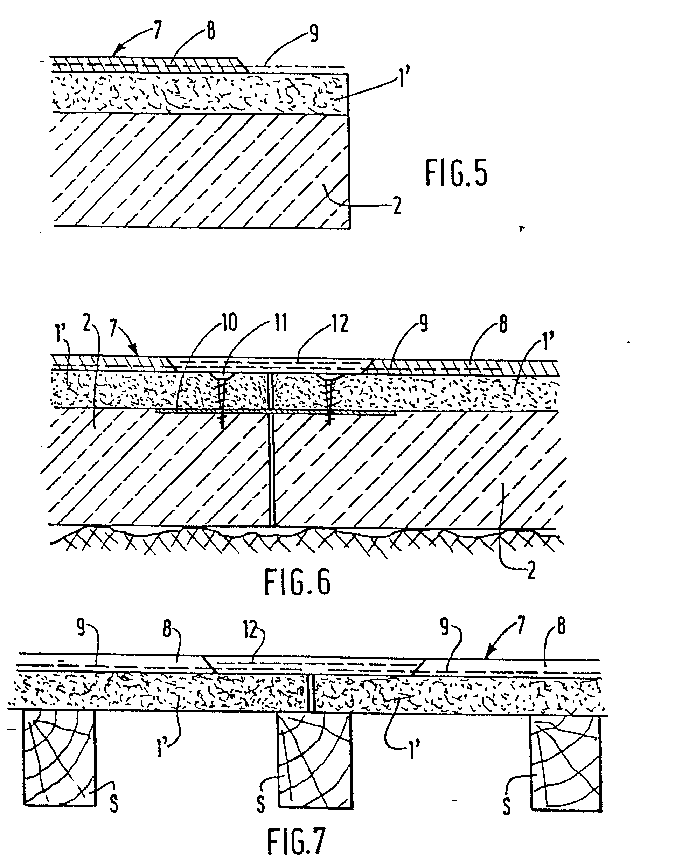

La figure 4 représente une forme de réalisation d'un panneau selon l'invention, dans laquelle l'isolant 2, par exemple du polystyrène expansé, est pris en sandwich entre, d'une part, une plaque de parement en plâtre 1, et, d'autre part, un voile de renfort et de stabilisation 7.

Ce voile 7 est réalisé en un matériau composite, dont la matrice, constituée de 25 à 50 % en parties et en poids de ciment Portland et/ou alumineux, de 30 à 60 % de charges calcaire et/ou siliceuse, de 2 à 15 % de résine vinylique et/ou acrylique, et de 0 à 2 % d'adjuvants divers, notamment

17

d'accélérateur de durcissement, se présente à l'état frais sous la forme d'une pâte, qui est étalée avec une épaisseur comprise entre 1 et 5 mm sur la face arrière ou face libre de l'isolant 2. Avant que cette matrice ne durcisse, une armature constituée d'une nappe de fibres de verre, dont le grammage est compris entre 50 et 1000 g/m², est noyée dans la matrice. En durcissant, la matrice adhère fortement à l'isolant 2, et donne au panneau D une raideur suffisante pour que ce dernier constitue un panneau isolant monobloc autoportant.

Le grammage de l'armature en nappe de fibres de verre ainsi que l'épaisseur de l'enduit servant de matrice d'enrobage des fibres sont fonction de la portée du panneau. Pour les hauteurs sous-plafond habituelles de l'ordre de 2,50 m, l'une des réalisations préférées se fait avec une grille de verre de 100 g/m² enrobée par un enduit de 1 à 2 mm d'épaisseur.

On a présenté, dans le tableau I ci-dessous, une comparaison entre les propriétés de trois panneaux de 3 m² (2,50 m x 1,20 m), d'une épaisseur équivalente de 9 cm, dont le premier est un complexe de doublage selon les figures 1 et 2, dont le second est un panneau de type sandwich selon la figure 3, et dont le troisième est un panneau à voile de renfort selon la figure 4, et tel que précisé ci-dessus (matrice de 1 à 2 mm d'épaisseur et grammage de la nappe ou du grillage de fibres de verre égal à 100 g/m²).

Tableau 1

|  | Complexe de doublage | Sandwich | Panneau selon l'invention |
|---|---|---|---|
|  | plaque de plâtre + polystyrène expansé (figs 1 et 2) | plaque de plâtre + polystyrène expansé + plaque de plâtre (fig. 3) | plaque de plâtre + polystyrène expansé + voile de renfort (fig. 4) |
| Poids en kg | 26 | 50 | 30 |
| Résistances mécaniques en flexion sur une portée de 2 m : |  |  |  |
| – charge rupture en daN | négligeable | 800 | 700 |
| – flèche sous 250 daN en mm | non mesurable, ne supporte pas la charge | 9 | 10 |
| Résistance thermique m².°C/W | 2 | 1,75 | 2 |

19

On observe que le panneau selon l'invention présente de loin le meilleur compromis entre les différentes caractéristiques recherchées.

De plus, on a constaté que ce panneau conserve une excellente stabilité dimensionnelle, lorsqu'il est soumis à des variations thermo-hygrométriques importantes, et ne présente pas d'effet bilame. En outre, il résiste très bien aux attaques biologiques (champignons et moisissures).

Sur la figure 5, on a représenté en coupe le bord d'un panneau isolant pour chape de sol. Ce panneau comprend une plaque support 1', à base de bois ou en plâtre, et une plaque 2 d'un matériau d'isolation thermique résistant en compression, qui a été rapportée contre la face inférieure ou sous-face de la plaque support 1'. Cette plaque support 1' a reçu, en usine, sur sa face supérieure, un voile de renfort 7, dont la matrice 8 n'a pas été étalée sur une marge de 5 à 10 cm de large s'étendant le long du périmètre de la plaque 1', tandis que l'armature en nappe de fibres 9 déborde de la matrice 8 et s'étend jusqu'à la tranche de la plaque 1'.

La figure 6 montre comment deux panneaux de chape de sol selon la figure 5 sont assemblés côte à côte et jointoyés, sur chantier, lors de leur mise en oeuvre pour réaliser la chape de sol. Tout d'abord, les panneaux sont liés l'un à l'autre par une platine 10 en tôle galvanisée, qui est engagée entre la plaque support 1' et la plaque d'isolant 2 des bords des deux panneaux par lesquels ceux-ci sont adjacents l'un à l'autre, et des vis autotaraudeuses 11 sont vissées dans les marges des panneaux non recouvertes du voile 7. Ces vis 11 traversent les plaques support 1', la platine de tôle 10, et leurs pointes sont enfoncées dans les isolants 2. Puis, la saignée large et peu profonde, formée par les parties adjacentes des marges des deux panneaux contigus, et déjà garnie de deux franges d'armature 9 en attente, est remplie de pâte constituant la matrice, après mise en place d'une bande 12 de nappe d'armature, qui assure la continuité par recouvrement des deux franges d'armature 9 débordant

20

des voiles de renfort 7 des deux panneaux.

On réalise ainsi un renforcement mécanique continu s'étendant sur toute la surface supérieure de la chape de sol. Ce renforcement continu supprime les risques de mouvement des joints des panneaux, de gauchissement de ces derniers et protège les panneaux des effets de l'humidité et des variations hygrométriques. De plus, la raideur de chaque panneau est améliorée par la présence de son voile de renfort 7, et les qualités de dureté (résistance au poinçonnement) et d'étanchéité de la chape recouverte d'un tel voile continu sont comparables à celles d'une chape traditionnelle.

Dans le tableau 2 ci-dessous, on a présenté une comparaison des caractéristiques mécaniques les plus intéressantes, pour cette application, de trois panneaux sans isolant, de 1,20 m de large et soumis à une flexion sur une portée de 1 m, les deux premiers étant des panneaux de chape de l'art antérieur, et le troisième un panneau de chape selon l'invention.

Tableau 2

|  | plaque de plâtre de 18 mm d'épais. | plaque de plâtre de 23 mm d'épais. | plaque de plâtre de 18 mm d'épais. ren- forcée par un voile de renfort de 4 mm |
|---|---|---|---|
| Charge de rupture en daN | 120 | 180 | 250 |
| Flèche sous 100 daN en mm | 40 | 10 | 6 |

Le panneau de chape selon l'invention présente des caractéristiques nettement supérieures à celles des autres panneaux.

La figure 7 représente deux panneaux de plancher porteur, adjacents et reposant sur des solives S, et dont

21

chacun ne diffère des panneaux de la figure 5/que le fait qu'il ne comporte pas de plaque isolante. L'épaisseur et/ ou les caractéristiques de la plaque support 1' en bois ou en plâtre peuvent être modulées en fonction des besoins, ain- si que l'épaisseur de la matrice 8 et/ou le grammage de l'armature 9 en nappe de fibres. Le jointoiement entre les panneaux est assuré de la même façon que décrit ci-dessus pour obtenir un voile de renfort continu, en rapportant une bande d'armature 12 et de la matrice en pâte dans la saignée formée par les deux marges adjacentes des panneaux.

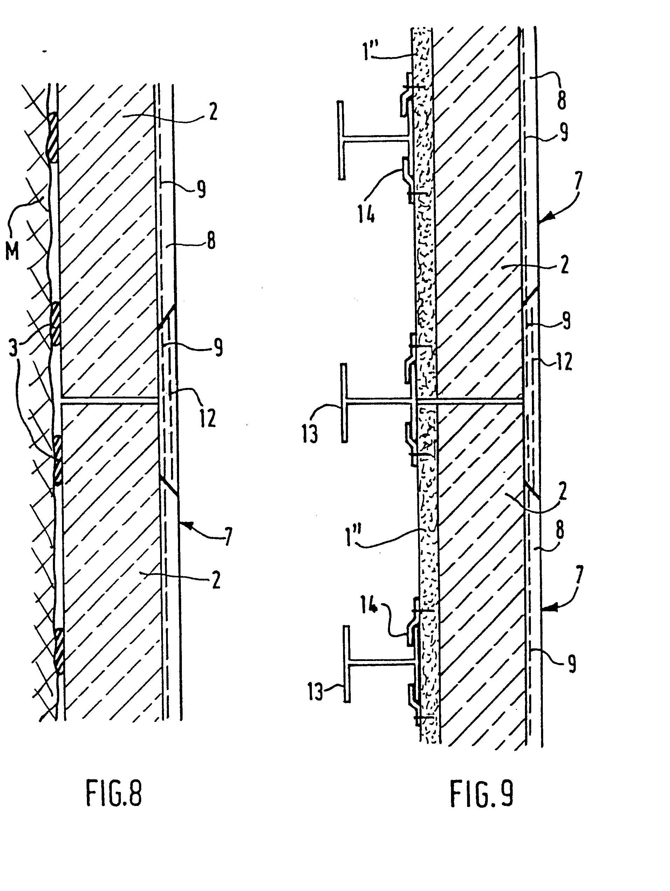

Sur la figure 8, on a partiellement représenté, en coupe, deux panneaux isolants préfabriqués d'une isolation extérieure de façade montée contre la face extérieure d'un mur M de configuration traditionnelle. Chaque panneau préfabriqué est constitué d'une plaque de matériau isolant 2, en polystyrène expansé ou en mousse de polyuréthane, dont la face externe est recouverte d'un voile de renfort 7, sauf sur une marge périphérique sans matrice 8, mais recouverte d'une frange d'armature 9 en nappe de fibres, qui dépasse de la matrice 8 du voile 7. Chaque panneau est fixé contre le mur M par des plots de colle 3, à consistance de mortier. Puis, la continuité du voile de renfort, assurant à la fois les qualités recherchées en matière d'étanchéité, de résistance mécanique et d'aspect esthétique, semblable à celui des revêtements traditionnels, c'est-à-dire sans joint apparent, est réalisée sur chantier de la même manière que dans les exemples décrits en référence aux figures 6 et 7, en garnissant d'une bande d'armature 12 et de matrice en pâte les saignées constituées chacune par deux marges adjacentes de panneaux contigus.

On obtient ainsi une isolation extérieure bien protégée contre les agressions atmosphériques, par un renforcement extérieur continu ayant une bonne dureté superficielle, et donc une bonne résistance au poinçonnement.

Lorsque la paroi de façade ne présente pas la configuration d'un mur traditionnel, par exemple lorsqu'il s'agit d'une paroi à ossature, le placage par collage des panneaux ne convient pas. On peut alors utiliser des panneaux sur lesquels la face intérieure de la plaque isolante 2 est entièrement recouverte d'un second voile de renfort. La raideur ainsi conférée aux panneaux est suffisante pour qu'ils puissent être utilisés comme panneaux de façade isolante, légère et autoportante. Cependant, pour réaliser une telle façade légère autoportante, on peut avantageusement utiliser des panneaux isolants tels que représentés sur la figure 9, et sur lesquels le second voile de renfort a été remplacé par une plaque 1" manufacturée à base de bois ou en plâtre. Cette plaque 1", qui apporte de la rigidité aux panneaux de façade isolants, sert également de support de fixation des organes 14, en forme de pattes ou de crapauds, assurant la liaison des panneaux aux poteaux ou membrures 13 de l'ossature de la façade. La continuité du voile de renfort 7 en revêtement externe de la façade isolée est assurée, comme dans les exemples des figures 6 à 8, en rapportant de la matrice en pâte et une bande d'armature 12 dans les saignées des joints.

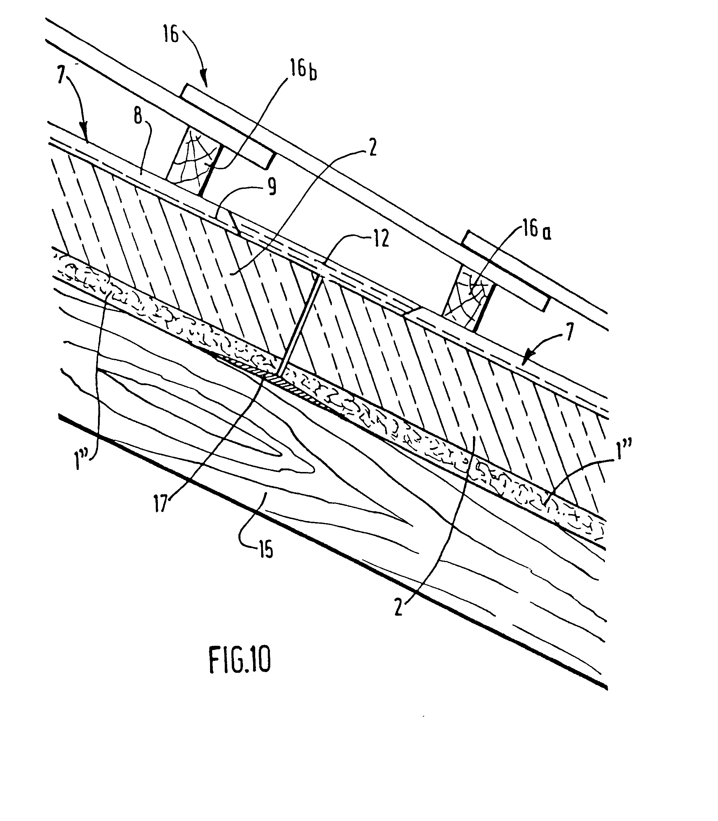

Sur la figure 10, on a partiellement représenté, en coupe, deux panneaux isolants de support de couverture, et à parement intérieur intégré. Chaque panneau est constitué d'une plaque d'isolant thermique 2, dont la face supérieure ou externe est revêtue d'un voile de renfort 7, sauf au niveau de la marge périphérique, comme dans les exemples précédents. La face inférieure ou interne de la plaque 2 peut être totalement revêtue d'un second voile de renfort, mais, comme représenté sur la figure 10, ce second voile de renfort est avantageusement remplacé par une plaque de plâtre 1" à bords amincis, par laquelle le panneau repose sur des chevrons de charpente 15. La couverture 16, à tuiles 16a reposant sur des liteaux 16b, est supportée contre le voile de renfort 7 de la face externe, dont la continuité est assurée comme dans les exemples précédents, par apport d'une bande d'armature 12 et de matrice en pâte dans les saignées aux joints des panneaux. La face inférieure ne présente pas de joint apparent entre les plaques en plâtre 1" des diffé-

0211752

23

rents panneaux, grâce à la technique bien connue dans l'art antérieur de traitement des joints à bords amincis 17. On obtient ainsi une étanchéité totale de la face supérieure, et une absence de fissuration de la face inférieure, grâce à des panneaux isolants préfabriqués d'une bonne résistance mécanique et d'une grande stabilité dimensionnelle.

24

REVENDICATIONS

1.Voile de renfort,destiné à recouvrir au moins partiellement une face au moins d'un élément préfabriqué du type panneau ou plaque de support (1')et/ou d'isolation (D) et/ou de revêtement pour la construction de bâtiments,caractérisé en ce qu'il est réalisé en un matériau composite constitué, d'une part, d'une matrice (8) à faible porosité,résistante en compression,peu ou pas sensible à l'eau, à l'humidité, ainsi qu'aux effets biologiques produits par une forte hygrométrie, et comportant essentiellement,en parties et en poids:

-de 25 à 50% de ciment,

-de 30 à 60% de charges minérales,

-de 2 à 15% d'au moins une résine synthétique,choisie parmi les résines vinyliques et/ou acryliques, et

-de 0 à 2% d'adjuvants divers,notamment d'accélérateurs de durcissement, et, d'autre part,

-une armature (9),résistante en traction,noyée dans la matrice (8),et constituée de fibres minérales et/ou synthétiques peu ou pas sensibles à l'eau,à l'humidité et aux effets biologiques produits par une forte hygrométrie.

2.Voile de renfort selon la revendication 1,caractérisé en ce que:

-le ciment de la matrice (8)est un ciment Portland ou alumineux ou un mélange de ciments Portland et/ou alumineux, et

-les charges minérales comprennent des charges calcaires et/ou siliceuses,la matrice ayant une épaisseur comprise entre environ 1 et 5 mm.

3.Voile de renfort selon l'une des revendications 1 et 2,caractérisé en ce que l'armature (9)est constituée de fibres en vrac ayant des longueurs comprises entre environ 5 et 25 mm.

4.Voile de renfort selon l'une des revendications 1 et 2,caractérisé en ce que l'armature (9)est constituée d'une nappe de fibres,tissée ou non,et dont le grammage

25

est compris entre environ 50 et 1000 g/m².

5. Voile de renfort selon l'une des revendications 1 à 4, caractérisé en ce que les fibres minérales sont choisies dans le groupe des fibres de verre et d'amiante.

6. Voile de renfort selon l'une des revendications 1 à 5, caractérisé en ce que les fibres synthétiques sont choisies dans le groupe des fibres de Kevlar, de polyamide et de polypropylène.

7. Elément préfabriqué du type panneau ou plaque de support (1') et/ou d'isolation (D) et/ou de revêtement, pour la construction de bâtiments, caractérisé en ce que l'une au moins de ses faces est au moins partiellement recouverte d'un voile de renfort (7) selon l'une des revendications 1 à 6.

8. Elément préfabriqué selon la revendication 7, du type panneau isolant (D) pour l'isolation intérieure des façades (M), comprenant une plaque de parement (1) adhérant par l'une de ses faces à une face d'une plaque (2) de matériau isolant, caractérisé en ce que le voile de renfort (7) est fixé à la face de la plaque (2) de matériau isolant qui n'est pas recouverte par la plaque de parement (1).

9. Elément préfabriqué selon la revendication 7, du type panneau de support et, éventuellement, d'isolation pour chape de sol, comprenant une plaque d'un matériau rigide (1'), éventuellement doublée du côté de la sous-face de la chape, d'une plaque de matériau isolant (2) résistant en compression, caractérisé en ce que le voile de renfort (7) recouvre la face de la plaque de matériau rigide (1') qui est tournée du côté de la face supérieure de la chape, sauf sur une marge de largeur limitée qui s'étend sur le périmètre de la plaque de matériau rigide (1'), l'armature (9) en nappe de fibres débordant de la matrice (8) du voile de renfort (7) et s'étendant au moins jusqu'à la tranche de la plaque (1').

10. Elément préfabriqué selon la revendication 7, du type panneau isolant pour l'isolation extérieure des façades, comprenant une plaque de matériau isolant (2) dont une face porte un revêtement de protection, caractérisé en ce que le revêtement de protection est constitué par le voile de renfort (7) qui recouvre cette face de la plaque de matériau isolant (2) sauf sur une marge de largeur limitée s'étendant sur le périmètre de la plaque (2), l'armature (9) en nappe de fibres débordant de la matrice (8) du voile de renfort (7) et s'étendant au moins jusqu'à la tranche de la plaque (2).

11. Elément préfabriqué selon la revendication 10, pour l'isolation extérieure d'une façade à ossature (13), caractérisé en ce que la face de la plaque de matériau isolant (2) qui ne porte pas le voile de renfort (7) est revêtue d'une couche de rigidification (1") et de support d'organes (14) de fixation à l'ossature (13) de sorte que l'élément constitue un panneau de façade légère autoportante.

12. Elément préfabriqué selon la revendication 11, caractérisé en ce que la couche de rigidification est constituée par un second voile de renfort selon l'une des revendications 1 à 6, et qui recouvre toute la face correspondante de la plaque de matériau isolant.

13. Elément préfabriqué selon la revendication 11, caractérisé en ce que la couche de rigidification est constituée par une plaque (1") à base de bois ou en plâtre.

14. Elément préfabriqué selon la revendication 7, du type panneau isolant de support de couverture et à parement intérieur intégré, de structure en sandwich comprenant une âme (2) en matière isolante entre deux couches rigides (7,1"), dont l'une est une couche externe (7) destinée à supporter la couverture (16) et l'autre une couche interne (1") constituant le parement intérieur intégré, caractérisé en ce qu'au moins la couche externe (7) est constituée d'un voile de renfort, qui recouvre la face externe de l'âme isolante (2) sauf sur une marge s'étendant sur le périmètre de cette face externe, l'armature (9) en nappe de fibres débordant de la matrice (8) du voile de renfort (7) et s'étendant au moins jusqu'à la tranche de l'âme isolante

27

(2).

15. Elément préfabriqué selon la revendication 14, caractérisé en ce qu'il comprend un voile de renfort sur chacune des deux faces de l'âme isolante (2).

16. Elément préfabriqué selon la revendication 14, caractérisé en ce que le parement intérieur intégré est constitué d'une plaque de plâtre (1") à bords amincis.

17. Procédé de pose d'un voile de renfort (7) selon l'une des revendications 1 à 6, sur un élément de construction du type panneau ou plaque de support (1') et/ou d'isolation (D) et/ou de revêtement, caractérisé en ce qu'il consiste à étaler la matrice (8) qui se présente à l'état frais sous forme d'une pâte, sur au moins une face du panneau ou de la plaque, et sur une épaisseur réglable à volonté entre environ 1 et 5 mm, puis à noyer l'armature (9) dans l'épaisseur de la matrice (8) avant que cette dernière ne durcisse.

18. Procédé selon la revendication 17, caractérisé en ce qu'il consiste à ne pas étaler la matrice (8) sur une marge de largeur limitée s'étendant le long du périmètre du panneau ou de la plaque, et à utiliser comme armature (9) une nappe de fibres que l'on fait déborder de la matrice (8) et s'étendre dans la marge au moins jusqu'à la tranche du panneau ou de la plaque.

19. Procédé de pose d'éléments préfabriqués revêtus d'au moins un voile de renfort (7) selon le procédé de la revendication 18, caractérisé en ce qu'il consiste à monter côte à côte plusieurs éléments en les reliant l'un à l'autre (10,11) et/ou à au moins un support (M, 13) commun à au moins deux éléments adjacents, de façon à obtenir des saignées formées chacune par deux marges adjacentes de deux éléments contigus et chacune garnie d'une frange d'armature (9) débordant de la matrice (8) du voile de renfort (7) de l'élément correspondant, puis à enduire chaque saignée avec de la pâte constituant la matrice (8), après avoir, éventuellement, rapporté dans la saignée une bande d'armature (12) de la largeur de la saignée, afin d'assurer la continuité du voile de renfort.

1/4

FIG.1

FIG.2

FIG.3

FIG.4

2/4

FIG.5

FIG.6

FIG.7

FIG.8

FIG.9

FIG.10

Office européen
des brevets

**RAPPORT DE RECHERCHE EUROPEENNE**

**0211752**
Numero de la demande

EP  86 40 1694

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| Y | FR-A-2 067 941  (BOUCHER) <br> * En entier * | 1 | E 04 C    2/04 <br> E 04 C    2/26 <br> C 04 B   28/04 <br> E 04 F   13/08 |
| A | | 2,4,5 | |
| | --- | | |
| Y,D | BE-A-  782 111  (DUFF) <br> * Page 3, lignes 15-29; page 4, lignes 9-12; page 4, ligne 18 - page 5, ligne 4; page 7, lignes 4-24; page 9, lignes 26-29; page 10, lignes 24-37; figures * | 1 | |
| A | | 2-6 | |
| | --- | | |
| A | FR-A-2 511 416  (MIPLACOL) <br> * Figure 3; revendications 1-3,6 * | 1,5,7 | DOMAINES TECHNIQUES RECHERCHES (Int Cl 4) |
| A | FR-A-1 507 312  (DEBARGE) | | E 04 C <br> E 04 B |
| | --- | | |
| A | GB-A-  910 156  (PAN-L CONSTRUCTION) | | |
| | --- | | |
| A | US-H-  456 148  (SCHNELLER) | | |
| | ----- | | |

Le present rapport de recherche a ete etabli pour toutes les revendications

| Lieu de la recherche <br> LA HAYE | Date d'achevement de la recherche <br> 09-10-1986 | Examinateur <br> MYSLIWETZ W.P. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 R2